# EUROPÄISCHE PATENTSCHRIFT

(11) **EP 3 808 973 B1**
(45) Veröffentlichungstag und Bekanntmachung des Hinweises auf die Patenterteilung: **12.10.2022**
(21) Anmeldenummer: 20202196.0
(22) Anmeldetag: 16.10.2020
(51) Int. Cl.: F03D 7/02

(54) **VORRICHTUNG ZUR BLATTWINKELEINSTELLUNG VON ROTORBLÄTTERN EINER WINDENERGIEANLAGE**
DEVICE FOR BLADE ANGLE ADJUSTMENT OF ROTOR BLADES OF A WIND ENERGY INSTALLATION
DISPOSITIF DE RÉGLAGE D'ANGLE DE LAMES DE ROTOR D'UNE ÉOLIENNE

(30) Priorität: 18.10.2019 DE 102019128233
(43) Veröffentlichungstag der Anmeldung: 21.04.2021
(73) Patentinhaber: Siemens Gamesa Renewable Energy Service GmbH, 20097 Hamburg (DE)
(72) Erfinder: Hamer, Florian, 24103 Kiel (DE)
(74) Vertreter: Glawe, Delfs, Moll

(56) Entgegenhaltungen:
- EP-A1- 3 321 503
- EP-A1- 3 336 347
- DE-A1-102012 104 875
- DE-A1-102018 218 112

## Beschreibung

Die Erfindung betrifft eine Vorrichtung zur Blattwinkeleinstellung von Rotorblättern einer Windenergieanlage sowie ein entsprechendes Verfahren.

Typische Windenergieanlagen umfassen einen Rotor, der drehbar an einer Gondel angeordnet ist, wobei die Gondel wiederum drehbar auf einem Turm angeordnet ist. Der Rotor treibt ggf. über eine Rotorwelle und ein Getriebe einen Generator an. Eine durch Wind induzierte Rotationsbewegung des Rotors kann so in elektrische Energie gewandelt werden, die dann über Umrichter und/oder Transformatoren - je nach Bauart des Generators auch wenigstens teilweise direkt - in ein elektrisches Netz eingespeist werden kann.

Der Rotor umfasst dabei mehrere - in der Regel drei - Rotorblätter, die zur Einstellung des Blattanstellwinkels drehbar an einer Rotornabe befestigt sind. Dazu ist zwischen einem Rotorblatt und der Rotornabe ein Blattwinkellager vorgesehen, um dessen Achse das Rotorblatt mit Hilfe eines Blattverstellantriebs gedreht werden kann.

Die Regelung des Blattanstellwinkels und die Steuerung des Blattverstellantriebs erfolgt regelmäßig anhand einer Ermittlung des aktuellen Blattanstellwinkels auf Basis von vorangegangenen Änderungen des Blattanstellwinkels ausgehend von einer Ausgangswinkelposition. Während sich die Änderungen des Blattanstellwinkels durch den Blattverstellantrieb oder äußere, auf das Rotorblatt einwirkenden (Wind-)Kräfte ausreichend genau messen lässt, muss die Ausgangswinkelposition regelmäßig manuell eingestellt werden. Auch wenn sich bei einer in Betrieb befindlichen Windenergieanlage das Erreichen einzelner Blattanstellwinkel - bspw. für die Fahnenposition - durch Endschalter o.ä. überprüfen lassen, ist für eine genaue Kalibrierung eben dieser Endschalter zuvor eine genaue manuelle Einstellung der Ausgangswinkelposition erforderlich. Eine ungenaue Einstellung der Ausgangswinkelposition führt zu einem dauerhaft von dem Soll-Anstellwinkel abweichenden Ist-Anstellwinkel eines Rotorblatts, was Leistungsverluste und unerwünschte Schwingungen während des Betriebs der Windenergieanlage zur Folge haben kann.

Es ist bekannt, für die manuelle Einstellung der Ausgangswinkelposition sog. Blattlehren zu verwenden. Diese Blattlehren werden an einer vorgegebenen Position am mit der Rotornabe verbundenen Teil des Blattwinkellagers befestigt und ragen in Richtung des Rotorblatts. Am Rotorblatt selbst ist eine Markierung vorgesehen. Zur Einstellung der Ausgangswinkelposition wird das Rotorblatt dann so verfahren, dass die Markierung am Rotorblatt mit der Blattlehre fluchtet. Bei der Markierung handelt es sich häufig um eine sog. 0°-Markierung, welche bei Erreichen der Blattlehre die 0°-Stellung des Rotorblatts angibt.

Nachteilig an diesem Stand der Technik ist, dass die Blattlehren unhandlich sind, weshalb eine Blattwinkeleinstellung häufig zwei Monteure erfordert. Aufgrund der Größe der Blattlehren kommt es auch häufig zu Beschädigungen, bspw. durch Verbiegen, die eine genaue Einstellung der Ausgangswinkelposition unmöglich machen. Nicht zuletzt müssen regelmäßig auch für unterschiedliche Windenergieanlagentypen unterschiedliche Blattlehren verwendet werden, womit ständig eine Vielzahl von unterschiedlichen Blattlehren vorgehalten werden muss.

Außerdem hat sich gezeigt, dass die Einstellung der Ausgangswinkelposition mit dem aus dem Stand der Technik bekannten Verfahren unter Zuhilfenahme einer Blattlehre häufig nicht präzise genug ist. Selbst wenn die Blattlehre nicht beschädigt oder verbogen ist, muss die Markierung am Rotorblatt über die Blattlehre mit Augenmaß angepeilt werden, wobei das letztendliche Ergebnis der Blatteinstellung je nach Monteur erfahrungsgemäß variiert. Selbst die Ergebnisse mehrerer Blatteinstellungen von ein und demselben Monteur können teilweise erheblich variieren.

Die europäische Patentanmeldung EP 3 336 347 A1 schlägt ein Laserpeilwerkzeug vor, welches an einer Schalenfläche des Blattwinkellagers eines Rotorblattes angeordnet werden kann und durch die Achse des Blattwinkellagers hindurch auf der gegenüberliegenden Seite eine Linie projiziert, anhand derer die Blatteinstellung vorgenommen werden kann. Allerdings erfordert die initiale Anordnung des Laserpeilwerkzeugs, damit dessen projizierte Linie in Übereinstimmung mit einer Nabenmarkierung aufgrund der Distanz zwischen Laserpeilwerkzeug und Nabenmarkierung - regelmäßig 2 bis 4 m - und Imperfektionen im Blattwinkellager - wie bspw. Ovalitäten - häufig einigen Aufwand. Auch können Winkelfehler im Blattwinkellager oder der Anordnung des Laserpeilwerkzeugs daran aufgrund der großen Distanz, die der Laserstrahl zurückzulegen hat, zu Fehlern bei der Blatteinstellung führen.

Darüber hinaus sind bei modernen Windenergieanlagen im Bereich des Blattwinkellagers eine Vielzahl von Komponenten angeordnet, von denen regelmäßig vor der Verwendung eines Laserpeilwerkzeugs gemäß EP 3 336 347 A1, aber auch von Blattlehren zunächst einzelne Komponenten, bspw. Fettauffangbehälter oder Fettbehältergehäuse, demontiert und nach erfolgter Einstellung der Ausgangswinkelposition wieder montiert werden, um ausreichend Platz für den Laserstrahl bzw. die Blattlehre zu schaffen. Der Zeitaufwand für die Blattwinkeleinstellung ist in einem solchen Fall erheblich.

Ausgehend von diesem Stand der Technik liegt der Erfindung die Aufgabe zugrunde eine verbesserte Vorrichtung zur Blattwinkeleinstellung der Rotorblätter einer Windenergieanlage zu schaffen, bei der die Nachteile aus dem Stand der Technik nicht mehr oder nur noch in vermindertem Umfang auftreten.

Gelöst wird diese Aufgabe durch eine Vorrichtung gemäß dem Hauptanspruch, sowie deren Verwendung gemäß dem Verfahrensanspruch 11. Vorteilhafte Weiterbildungen sind Gegenstand der abhängigen Ansprüche.

Demnach betrifft die Erfindung eine Vorrichtung zur Blattwinkeleinstellung der Rotorblätter einer Windenergieanlage umfassend zwei voneinander beabstandete Ausrichthilfen zur Ausrichtung der Vorrichtung an einer Schalenfläche des Blattwinkellagers eines Rotorblattes oder einer damit verbundenen Komponente, und wenigstens ein von der Verbindungsebene zwischen den beiden Ausrichthilfen beabstandetes Lasermodul zum Aussenden eines sichtbaren Laserstrahls derart, dass der Laserstrahl die Verbindungsebene schneidet.

Weiterhin betrifft die Erfindung ein Verfahren zur Blattwinkeleinstellung eines Rotorblatts einer Windenergieanlage mit einer erfindungsgemäßen Vorrichtung, mit den Schritten:
a) Anlegen der Vorrichtung mit ihren Ausrichthilfen an einer Schalenfläche des Blattwinkellagers des Rotorblattes oder einer damit verbundenen Komponente derart, dass ein von der Vorrichtung ausgehender Laserstrahl auf eine Nabenmarkierung im Bereich der Vorrichtung trifft;
b) Befestigen der Vorrichtung in der gefundenen Position; und
c) Verfahren des Rotorblatts, bis ein von der Vorrichtung ausgehender Laserstrahl auf eine Rotorblattmarkierung auf dem Rotorblatt trifft.

Der Begriff "Lasermodul" bezeichnet ein Modul, an deren Austrittsfläche ein Laserstrahl austritt, wobei die Austrittsfläche dabei grundsätzlich senkrecht auf der Hauptstrahlrichtung des Laserstrahls steht. Das Modul kann neben dem eigentlichen Laserstrahlerzeuger dabei beliebige optische, auch vom Laserstrahlerzeuger beabstandete Elemente aufweisen, um den Laserstrahl in eine gewünschte Form (bspw. Linienform) zu wandeln oder dessen Richtung zu verändern (wie bspw. Spiegel), wobei die Austrittsfläche des Lasermoduls dann durch dessen jeweils letztes optisches Element definiert wird. Im Rahmen der vorliegenden Erfindung beziehen sich Abstände vom Lasermodul auf diese Austrittsfläche.

Mit "Verbindungsebene" ist eine die beiden Ausrichthilfen verbindende gedankliche Ebene bezeichnet, die in der Regel die jeweiligen Kontaktbereiche der Ausrichthilfen, mit denen die Ausrichthilfen an dem Blattwinkellagers des Rotorblattes oder einer damit verbundenen Komponente anliegen, miteinander verbindet. Zwar mögen sich die Kontaktbereiche je nach Verwendung der Vorrichtung verändern, bspw. wenn die Vorrichtung bei Blattwinkellagern mit unterschiedlichen Durchmessern zum Einsatz kommt, es lässt sich aber grundsätzlich immer eine entsprechende Verbindungsebene finden. Aufgrund der regelmäßig auftretenden linienförmigen oder flächigen Kontaktbereiche ist die Verbindungsebene dabei häufig vollständig definierbar. Bei ordnungsgemäßer Verwendung der erfindungsgemäßen Vorrichtung verläuft die Verbindungsebene der Vorrichtung mit an die Schalenfläche des Blattwinkellagers eines Rotorblattes oder einer damit verbundenen Komponente ordnungsgemäß angelegten Ausrichthilfen bspw. häufig parallel zur Achse des Blattwinkellagers.

Die erfindungsgemäße Vorrichtung zeichnet sich dadurch aus, dass ausgehend von der Verbindungsebene zwischen zwei Ausrichthilfen ein Lasermodul angeordnet ist, der davon beabstandet einen Laserstrahl aussendet, der die Verbindungsebene unmittelbar schneidet, um dann auf der Schalenfläche des Blattwinkellagers eines Rotorblattes oder einer damit verbundenen Komponente ein vorgegebenes sichtbares Lasermuster, bspw. umfassend ein oder mehrere Punkte, oder eine oder mehrere Linien, zu projizieren. In anderen Worten wird das fragliche Lasermuster in einem Bereich unmittelbar an der Vorrichtung - nämlich regelmäßig in dem Bereich der beiden Ausrichthilfen u.a. auf die Komponente, an der die Ausrichthilfen anliegen - projiziert.

Die Strecke, welche der Laserstrahl dabei zurücklegen muss, wird maßgeblich durch den Abstand der Austrittsfläche des Lasermoduls von der genannten Verbindungsebene bestimmt, der nahezu frei wählbar, ist, aufgrund der typischen Anforderung, Ausrichtwerkzeuge gut handhabbar und klein auszugestalten, aber regelmäßig deutlich kürzer als die Strecke, die der Laserstrahl bspw. bei dem Laserpeilwerkzeug gemäß EP 3 336 347 A1 zurücklegen muss, die maßgeblich vom Durchmesser des Blattwinkellagers abhängt. In Fällen ordnungsgemäßer Verwendung ist aufgrund der genannten typischen Anforderungen an die Handhabbarkeit das Lasermodul grundsätzlich zwischen der Verbindungsebene und einer dazu parallelen Ebene durch den Lagermittelpunkt des Blattwinkellagers angeordnet. In anderen Worten ist der Abstand von Lasermodul zur Verbindungsebene typischerweise jedenfalls kleiner als der halbe Innendurchmesser des einzustellenden Blattwinkellagers.

Da die erfindungsgemäße Vorrichtung aufgrund ihrer Ausgestaltung grundsätzlich im Bereich der Nabenmarkierung anzuordnen ist (und nicht auf der davon gegenüberliegenden Seite des Blattwinkellagers, wie bspw. bei dem Peilwerkzeug gemäß EP 3 336 347 A1), ist häufig auch eine gegenüber diesem Stand der Technik schnellere und genauere Ausrichtung möglich. Auch müssen aufgrund der kürzeren Lauflänge des Laserstrahls häufig keine Komponenten für die Verwendung der erfindungsgemäßen Vorrichtung demontiert werden, welche die Ausbreitung des Laserstrahls behindern könnten.

Bei ihrer Verwendung, insbesondere auch in bereits existierenden Windenergieanlagen, deren Blatteinstellwinkel zuvor mit Hilfe einer Blattlehre eingestellt wurde, kann die erfindungsgemäße Vorrichtung mit Hilfe des von dem Lasermoduls ausgesendeten Laserstrahls zunächst selbst positioniert werden. Dazu wird die Position der Vorrichtung entlang der Schalenfläche des Blattwinkellagers oder einer damit verbundenen Komponente solange verändert, bis das projizierte Lasermuster mit einer eine gegenüber der Rotornabe ortsfesten Markierung, bspw. eine 0°-Markierung, im Bereich des Blattwinkellagers - also bspw. am Blattwinkellager selbst oder am Gusskörper der Rotornabe - übereinstimmt. Eine entsprechende Nabenmarkierung ist bei bestehenden Windenergieanlagen als Hilfe für die Positionierung von Blattlehren grundsätzlich vorhanden. Die Vorrichtung kann dann in dieser Position befestigt werden, bevor anschließend das Rotorblatt verfahren wird, bis das von der Vorrichtung projizierte Lasermuster nicht nur mit der Nabenmarkierung, sondern auch mit einer Rotorblattmarkierung zusammenfällt. Es ist dann die gewünschte Ausgangswinkelposition, bspw. eine 0°-Stellung, erreicht.

Alternativ ist es auch möglich, dass die Ausrichthilfen zum Formschluss mit geeignet ausgeformten Gegenparts an einem Blattwinkellager oder einer damit verbundenen Komponente ausgebildet sind. Bspw. können die Ausrichthilfen zum Einstecken in dafür vorgesehene Öffnungen im Blattwinkellager oder der Rotornabe ausgebildet sein. In diesem Fall ist es ausreichend, wenn das Lasermuster nur mit der Rotorblattmarkierung zusammenfallen kann, was zur Blattwinkeleinstellung durch letztendlich geeignete Drehung des Blattwinkellagers erreicht wird. Es ist auch möglich, dass zur Ausrichtung der Vorrichtung gegenüber der Nabenmarkierung ein geeigneter Zeiger oder eine geeignete Markierung an der Vorrichtung vorgesehen ist.

Das Lasermuster kann grundsätzlich beliebig ausgestaltet sein. Es muss sich lediglich eignen, bei ordnungsgemäßer Verwendung der Vorrichtung mit der Nabenmarkierung und/oder der Rotorblattmarkierung zusammenzufallen. So kann das Muster lediglich ein oder zwei Punkte umfassen, von denen - sofern die initiale Positionierung der Vorrichtung mit Hilfe einer projizierten Nabenmarkierung eingestellt werden muss und nicht bereits bspw. durch Formschluss gegeben ist - ein Punkt bei erfolgter Blattwinkeleinstellung grundsätzlich mit der Nabenmarkierung, ein anderer Punkt grundsätzlich mit der Rotorblattmarkierung zusammenfällt. Es ist auch möglich, dass das Lasermodul lediglich einen einzelnen Punkt projiziert, aber um eine gegenüber den Ausrichthilfen feste Achse schwenkbar ist, sodass der Punkt bei erfolgter Blattwinkeleinstellung wahlweise mit der Nabenmarkierung und/oder der Rotorblattmarkierung zusammenfällt. Bevorzugt ist es aber, wenn das Lasermuster eine Linie umfasst, die gleichzeitig sowohl mit der Nabenmarkierung als auch mit der Rotorblattmarkierung zusammenfallen kann bzw. im Falle erfolgter Blattwinkeleinstellung zusammenfällt.

Die "Längsausdehnungsebene" eines Laserstrahls bezeichnet in Zusammenhang mit der vorliegenden Erfindung eine evtl. durch diejenigen beiden einzelnen Laserstrahlen gebildete Ebene, mit denen zwei Punkten des Lasermusters projiziert werden, von denen der eine bei erfolgter Blattwinkeleinstellung mit der Nabenmarkierung, der andere mit der Rotorblattmarkierung zusammenfällt. Eine Längsausdehnungsebene liegt dabei sowohl bei Lasermodulen, die mehr als zwei Punkte oder eine Linie projizieren, als auch bei einem schwenkbaren Lasermodul vor. Im letztgenannten Fall verläuft die Längsausdehnungsebene senkrecht zur Schwenkachse.

Es ist bevorzugt, wenn die Ausrichthilfen und das wenigstens eine Lasermodul an einem gemeinsamen Grundkörper angeordnet sind. Indem die Ausrichthilfen und das wenigstens eine Lasermodul an einem gemeinsamen strukturellen Bauteil - nämlich dem Grundkörper - angeordnet und befestigt sind, ist die relative Position dieser Bauteile zueinander grundsätzlich fest, was eine gute Ausrichtsicherheit des Lasermoduls bzw. dessen Laserstrahl gegenüber der Verbindungsebene gewährleistet.

Soll sich das vom Lasermodul ausgesendete Lasermuster zu beiden Seiten des Grundkörpers erstrecken, um so gleichzeitig sowohl mit der Nabenmarkierung als auch mit der Rotorblattmarkierung zusammenfallen zu können, oder ist ein ein schwenkbares Lasermodul vorgesehen, ist es bevorzugt, wenn der Grundkörper ausgehend von dem Befestigungsbereich des Lasermoduls vorzugsweise derart geschlitzt ist, dass ein vom Lasermodul ausgesendeter Laserstrahl ein Lasermuster zu beiden Seiten des Grundkörpers projizieren kann. Dadurch ist es bspw. möglich, dass eine Linie zu beiden Seiten des Grundkörpers von einem einzelnen Lasermodul erzeugt wird, sodass Ausrichtungsungenauigkeiten, die bei zwei zu beiden Seiten des Grundkörpers anzuordnenden Lasermodulen auftreten könnten, vermieden werden. Vergleichbares gilt für ein um eine vorgegebene Achse schwenkbares Lasermodul.

Auch wenn der Grundkörper bevorzugt aus Metall gefestigt ist, sind grundsätzlich beliebige andere Werkstoffe für den Grundkörper möglich. Wesentlich ist lediglich, dass sich der Grundkörper bei ordnungsgemäßer Verwendung nicht verformt, insbesondere also die relative Position der Ausrichthilfen und des wenigstens einen Lasermoduls zueinander dauerhaft gewährleistet ist. Der Grundkörper kann bspw. als Blech ausgeformt sein.

Um eine hohe Ausrichtgenauigkeit zu gewährleisten, ist bevorzugt, wenn die Befestigungsbereiche für die Ausrichthilfen und das wenigstens eine Lasermodul hochgenau, vorzugsweise durch CNC-gestützte Fertigungsverfahren, wie bspw. Laserschneiden, Wasserstrahlschneiden oder Fräsen, in den Grundkörper eingebracht sind. Durch eine hochgenaue Anordnung der Befestigungsbereiche auf dem Grundkörper, werden zumindest durch die Vorrichtung selbst praktisch keine Ausrichtfehler verursacht.

Es ist bevorzugt, wenn eine evtl. vorhandene Längsausdehnungsebene des Laserstrahls die Verbindungsebene zwischen den beiden Ausrichthilfen unter einem Winkel von ca. 90°, vorzugsweise genau 90°, schneidet. Bei einem entsprechenden Winkel kann die erfindungsgemäße Vorrichtung regelmäßig ohne Weiteres mit den bspw. für die Verwendung einer Blattlehre vorgesehenen Markierungen auf Nabe und Rotorblatt zu beiden Seiten eines Blattwinkellagers verwendet werden.

Es ist bevorzugt, wenn eine evtl. vorhandene Längsausdehnungsebene bei ordnungsgemäßer Verwendung der Vorrichtung zur Achse des Blattwinkellagers parallel verläuft. Dafür kann eine geeignete Justierbarkeit des Winkels am Lasermodul vorgesehen sein, die nach geeigneter Prüfung bei Bedarf nachgestellt werden kann, um so eine hohe Ausrichtgenauigkeit zu gewährleisten.

Es ist bevorzugt, wenn die Vorrichtung eine Magnethalterung umfasst, mit der die Vorrichtung lösbar am Blattwinkellager befestigt werden kann. Das Blattwinkellager ist regelmäßig zumindest zu großen Teilen aus Metall gefertigt, sodass über eine Magnethalterung die Vorrichtung an dem Blattwinkellager sicher in Position gehalten werden kann. Die Magnethalterung kann dabei bevorzugt auch zum Anhaften an der Stirnfläche des Blattwinkellagers ausgebildet sein. Dadurch wird in der Regel eine gute und vorhersehbare Ausrichtung der Vorrichtung gegenüber der Achse des Blattwinkellagers erreicht.

Vorzugsweise umfasst die Vorrichtung eine Batterie zur Versorgung des Lasermoduls mit elektrischer Energie. Weiter vorzugsweise ist die Batterie wiederaufladbar. Verfügt die Vorrichtung über eine entsprechende Batterie, kann auf eine externe Stromzuführung zum Lasermodul, bspw. über ein Kabel, verzichtet werden, wodurch die Handhabung der Vorrichtung vereinfacht wird.

Zur Erläuterung des erfindungsgemäßen Verfahrens wird auf die vorstehenden Ausführungen verwiesen. Das Verfahren bietet gegenüber dem Stand der Technik den Vorteil, dass die Einstellung des Blattanstellwinkels deutlich präziser erfolgen kann als bei Verwendung einer bekannten Blattlehre. Auch kann die Einstellung ohne weiteres durch einen einzelnen Monteur durchgeführt werden. Da weiterhin auf eine aufwendige Montage einer Blattlehre mit ggf. erforderlicher vorangehender Demontage anderer Bauteile, die auch bei einem Laserpeilwerkzeug gemäß EP 3 336 347 A1 erforderlich sein kann, verzichtet werden kann, lässt sich häufig auch eine Zeitersparnis für die Blattwinkeleinstellung erreichen.

Die Erfindung wird nun anhand einer vorteilhaften Ausführungsform unter Bezugnahme auf die beigefügten Zeichnungen beispielhaft beschrieben. Es zeigen:
- Figuren 1-3:: ein Ausführungsbeispiel einer erfindungsgemäßen Vorrichtung; und
- Figur 4:: eine schematische Darstellung der Verwendung der Vorrichtung aus Figuren 1-3.

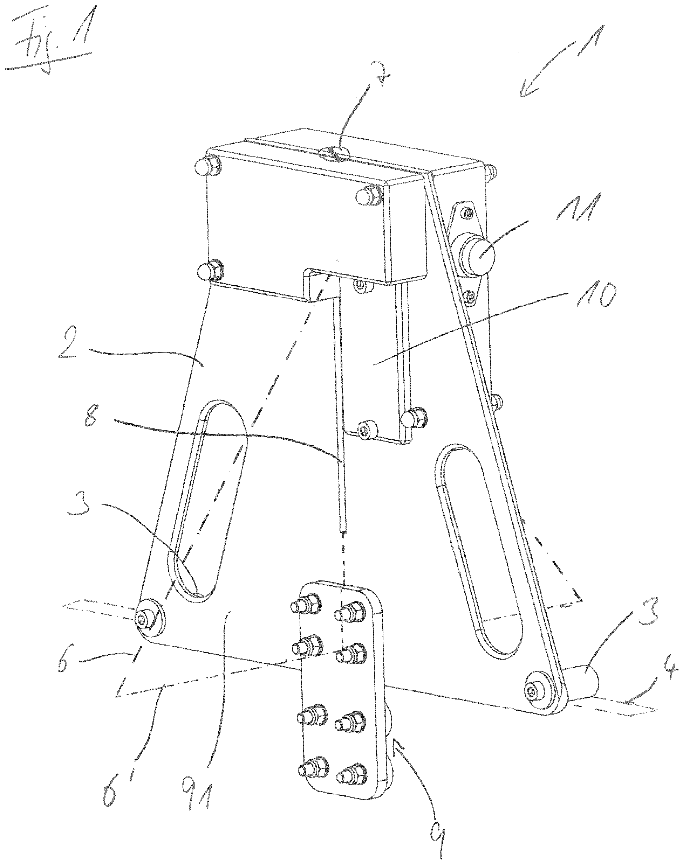

In Figuren 1 bis 3 ist eine erfindungsgemäße Vorrichtung 1 zur Blattwinkeleinstellung eines Rotorblatts einer Windenergieanlage in verschiedenen Ansichten gezeigt.

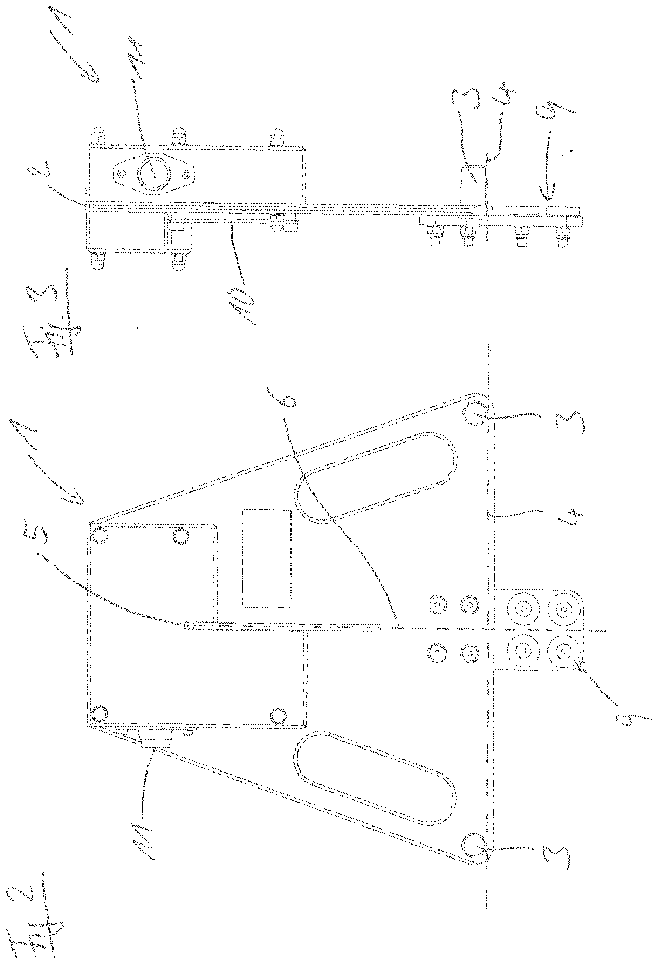

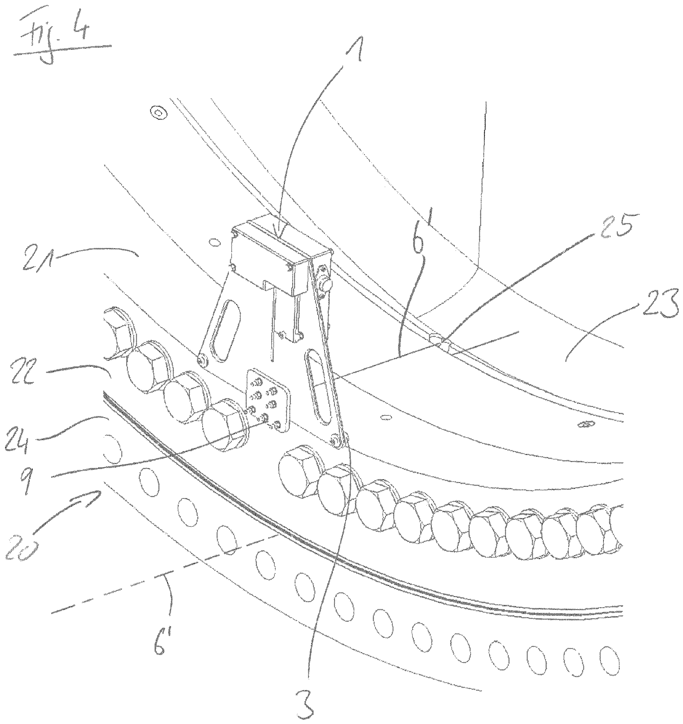

Die Vorrichtung 1 umfasst eine lasergeschnittenes Blech als Grundkörper 2 mit zwei daran voneinander beabstandet befestigten Ausrichthilfen 3, mit denen die Vorrichtung 1 an einer Schalenfläche 21 eines Blattwinkellagers 20 (vgl. Figur 4) angelegt werden kann. Bei den Ausrichthilfen 3 handelt es sich um über den Grundkörper 2 hervorstehende Stifte. Die Kontaktbereiche, mit denen die Ausrichthilfen 3 an der Schalenfläche 21 des Blattwinkellagers 20 letztendlich anliegen, definieren die in Figuren 1 und 2 angedeutete Verbindungsebene 4.

Ebenfalls am Grundkörper 2 befestigt ist ein Lasermodul 5 (vgl. Figur 2), das so beabstandet von der Verbindungsebene 4 zwischen den beiden Ausrichthilfen 3 und dieser zugewandt angeordnet ist, dass das - im vorliegenden Beispiel - eine Linie als Lasermuster 6' projizierende Laserstrahl 6 die Verbindungsebene 4 schneidet, wobei die Längsausdehnungsebene 91 des Laserstrahls 6 dabei in einem 90° Winkel zur Verbindungsebene 4 steht. Die Längsausdehnungsebene 91 des linienförmigen Laserstrahls 6 soll bei der ordnungsgemäßen Verwendung parallel zur Achse des Blattwinkellagers 20 verlaufen. Die genaue Winkelausrichtung des Laserstrahls 6 gegenüber der Achse des Blattwinkellagers 20 lässt sich dabei über die Stellschraube 7 bei Bedarf (fein-)justieren.

Damit das von dem Lasermodul 5 projizierte Lasermuster 6' einer Linie zu beiden Seiten des Grundkörpers 2 auch tatsächlich projiziert werden kann, ist der Grundkörper 2 ausgehend von dem Lasermodul 5 geschlitzt. Aufgrund des Schlitzes 8 kann sich der vom Lasermodul 5 abgegebene Laserstrahl 6 zu beiden Seiten des Grundkörpers 2 ausbreiten.

An dem Grundkörper 2 ist weiterhin eine Magnethalterung 9 vorgesehen. Die Magnethalterung 9 ist so angeordnet, dass sie bei der ordnungsgemäßen Anordnung der Vorrichtung 1 an einem Blattwinkellager 20 in Kontakt mit einem metallischen Bestandteil des Blattwinkellagers 20 - nämlich bspw. dessen Stirnfläche (vgl. Figur 4) - kommt und die Vorrichtung 1 so lösbar an dem Blattwinkellager 20 befestigt wird.

Außerdem ist noch ein Batteriefach 10 zur Aufnahme einer Batterie oder eines Akkumulators zur Versorgung des Linienlasers 5 mit elektrischer Energie vorgesehen, wobei der Linienlaser 5 über den Schalter 11 ein- und ausgeschaltet werden kann.

In Figur 4 ist die Verwendung der Vorrichtung aus Figuren 1 bis 3 zur Blattwinkeleinstellung eines Rotorblatts einer Windenergieanlage schematisch dargestellt, wobei aus Darstellungsgründen das Rotorblatt selbst nicht gezeigt ist. Figur 4 beschränkt sich in der Darstellung der Windenergieanlage vielmehr auf das Blattwinkellager 20 eines Rotorblatts, welches mit seinem Innenring 22 an der Rotornabe 23 befestigt ist und dessen Außenring 24 zur Anbindung des Rotorblatts vorgesehen ist. An der Rotornabe 23 ist weiterhin eine 0°-Markierung 25 vorgesehen.

Die Vorrichtung 1 wird bei eingeschaltetem Linienlaser 5 so mit ihren Ausrichthilfen 3 an die Schalenfläche 21 des Blattwinkellagers 20 angelegt und mit der Magnethalterung 9 befestigt, dass das durch den Laserstrahl 6 projizierte Linie als Lasermuster 6' auf die Rotornabe 23 gebildete Linie mit der 0°-Markierung 25 zusammenfällt.

Auf der anderen Seite der Vorrichtung 1 würde bei montiertem Rotorblatt auf dessen Innenseite ebenfalls die Linie des Lasermusters 6' projiziert werden, was in Figur 4 gestrichelt dargestellt ist. Das Rotorblatt kann dann solange gedreht werden, bis eine dort vorgesehene 0°-Markierung mit der Linie des projizierten Lasermusters 6' zusammenfällt. Das Rotorblatt ist dann in die gewünschte Ausgangswinkelposition - in diesem Fall die 0°-Blattwinkelstellung - verfahren. Auf Basis dieser Ausgangswinkelposition kann dann nachfolgend auf gewohnte Weise die Blattwinkelsteuerung erfolgen.

## Patentansprüche

1. Vorrichtung (1) zur Blattwinkeleinstellung der Rotorblätter einer Windenergieanlage umfassend zwei voneinander beabstandete Ausrichthilfen (3) zur Ausrichtung der Vorrichtung (1) an einer Schalenfläche (21) des Blattwinkellagers (20) eines Rotorblattes oder einer damit verbundenen Komponente, und wenigstens ein von der Verbindungsebene (4) zwischen den beiden Ausrichthilfen (3) beabstandetes Lasermodul (5) zum Aussenden eines sichtbaren Laserstrahls (6) derart, dass der Laserstrahl (6) die Verbindungsebene (4) schneidet.

2. Vorrichtung nach Anspruch 1,
**dadurch gekennzeichnet, dass**
die Ausrichthilfen (3) und das wenigstens eine Lasermodul (5) an einem gemeinsamen Grundkörper (2) befestigt sind.

3. Vorrichtung nach Anspruch 2,
**dadurch gekennzeichnet, dass**
der Grundköper (2) ausgehend von dem Befestigungsbereich des Lasermoduls (5) derart geschlitzt ist, dass ein vom Lasermodul (5) ausgesendeter Laserstrahl (6) ein Lasermuster 6' zu beiden Seiten des Grundkörpers (2) projizieren kann.

4. Vorrichtung nach Anspruch 3,
**dadurch gekennzeichnet, dass**
das Lasermuster 6' eine Linie umfasst, die zu beiden Seiten der des Grundkörpers (2) projiziert wird.

5. Vorrichtung nach einem der Ansprüche 2 bis 4,
**dadurch gekennzeichnet, dass**
die Befestigungsbereiche für die Ausrichthilfen (3) und das wenigstens eine Lasermodul(5) hochgenau, vorzugsweise durch CNC-gestützte Fertigungsverfahren, in den Grundkörper (2) eingebracht sind.

6. Vorrichtung nach einem der vorhergehenden Ansprüche,
**dadurch gekennzeichnet, dass**
eine Längsausdehnungsebene des Laserstrahls (6) die Verbindungsebene (4) zwischen den beiden Ausrichthilfen (3) unter einem Winkel von ca. 90°, vorzugsweise von genau 90°, schneidet.

7. Vorrichtung nach einem der vorhergehenden Ansprüche,
**dadurch gekennzeichnet, dass**
eine Längsausdehnungsebene bei ordnungsgemäßer Verwendung der Vorrichtung (1) zur Achse des Blattwinkellagers parallel verläuft.

8. Vorrichtung nach einem der vorhergehenden Ansprüche,
**dadurch gekennzeichnet, dass**
eine Magnethalterung (9) vorgesehen ist, um die Vorrichtung (1) lösbar am Blattwinkellager (20) zu befestigen.

9. Vorrichtung nach Anspruch 8,
**dadurch gekennzeichnet, dass**
die Magnethalterung (9) zum Anhaften an der Stirnfläche des Blattwinkellagers ausgebildet ist.

10. Vorrichtung nach einem der vorhergehenden Ansprüche,
**dadurch gekennzeichnet, dass**
die Vorrichtung (1) eine Batterie, vorzugsweise eine wieder aufladbare Batterie, zur Versorgung des Lasermoduls (5) mit elektrischer Energie umfasst.

11. Verfahren zur Blattwinkeleinstellung eines Rotorblatts einer Windenergieanlage mit einer Vorrichtung (1) gemäß einem der vorhergehenden Ansprüche, mit den Schritten:
a) Anlegen der Vorrichtung (1) mit ihren Ausrichthilfen (3) an einer Schalenfläche (21) des Blattwinkellagers (20) des Rotorblattes oder einer damit verbundenen Komponente derart, dass ein von der Vorrichtung (1) ausgehender Laserstrahl (6) auf eine Nabenmarkierung (25) im Bereich der Vorrichtung (1) trifft;
b) Befestigen der Vorrichtung (1) in der gefundenen Position; und
c) Verfahren des Rotorblatts, bis ein von der Vorrichtung (1) ausgehender Laserstrahl (6) auf eine Rotorblattmarkierung auf dem Rotorblatt trifft.

12. Verfahren nach Anspruch 11,
**dadurch gekennzeichnet, dass**
die Nabenmarkierung (25) und die Rotorblattmarkierung eine 0°-Markierung sind.

13. Verfahren nach Anspruch 11 oder 12,
**dadurch gekennzeichnet, dass**
vor Anlegen der Vorrichtung (1) an einer Schalenfläche (21) des Blattwinkellagers (20) des Rotorblattes oder einer damit verbundenen Komponente die Winkelausrichtung Längsausdehnungsebene gegenüber der Verbindungsebene (4) zwischen den beiden Ausrichthilfen oder gegenüber der Achse des Blattwinkellagers (20) überprüft und/oder auf einen vorgegebenen Wert justiert wird.

## Claims

1. Device (1) for adjusting the blade angle of the rotor blades of a wind turbine, comprising two alignment aids (3) spaced apart from each other for aligning the device (1) on a shell surface (21) of the blade angle bearing (20) of a rotor blade or a component connected thereto, and at least one laser module (5) spaced apart from the connecting plane (4) between the two alignment aids (3) for emitting a visible laser beam (6) in such a way that the laser beam (6) intersects the connecting plane (4).

2. Device according to Claim 1,
**characterized in that**
the alignment aids (3) and the at least one laser module (5) are attached to a common base body (2).

3. Device according to Claim 2,
**characterized in that**
starting from the attachment area of the laser module (5), the base body (2) is slotted in such a way that a laser beam (6) emitted by the laser module (5) is able to project a laser pattern 6' on both sides of the base body (2).

4. Device according to Claim 3,
**characterized in that**
the laser pattern 6' comprises a line which is projected on both sides of the base body (2).

5. Device according to one of Claims 2 to 4,
**characterized in that**
the attachment areas for the alignment aids (3) and the at least one laser module (5) are introduced into the base body (2) highly precisely, preferably by CNCsupported production methods.

6. Device according to one of the preceding claims,
**characterized in that**
a longitudinal extension plane of the laser beam (6) intersects the connecting plane (4) between the two alignment aids (3) at an angle of about 90°, preferably of exactly 90°.

7. Device according to one of the preceding claims,
**characterized in that**
during proper use of the device (1), a longitudinal extension plane runs parallel to the axis of the blade angle bearing.

8. Device according to one of the preceding claims,
**characterized in that**
a magnetic holder (9) is provided in order to attach the device (1) detachably to the blade angle bearing (20).

9. Device according to Claim 8,
**characterized in that**
the magnetic holder (9) is designed to adhere to the front face of the blade angle bearing.

10. Device according to one of the preceding claims,
**characterized in that**
the device (1) comprises a battery, preferably a rechargeable battery, for supplying the laser module (5) with electrical energy.

11. Method for adjusting the blade angle of a rotor blade of a wind turbine with a device (1) according to one of the preceding claims, comprising the steps:
a) applying the device (1) with its alignment aids (3) to a shell surface (21) of the blade angle bearing (20) of the rotor blade or a component connected thereto in such a way that a laser beam (6) originating from the device (1) strikes a hub marking (25) in the area of the device (1);
b) attaching the device (1) in the position found; and
c) moving the rotor blade until a laser beam (6) originating from the device (1) strikes a rotor blade marking on the rotor blade.

12. Method according to Claim 11,
**characterized in that** the hub marking (25) and the rotor blade marking are a 0° marking.

13. Method according to Claim 11 or 12,
**characterized in that**
before applying the device (1) to a shell surface (21) of the blade angle bearing (20) of the rotor blade or a component connected thereto, the angular alignment of the longitudinal extension plane with respect to the connecting plane (4) between the two alignment aids or with respect to the axis of the blade angle bearing (20) is checked and/or adjusted to a predefined value.

## Revendications

1. Dispositif (1) de réglage d'angle de pale des pales de rotor d'une éolienne, comprenant deux dispositifs d'aide à l'alignement (3) espacés l'un par rapport à l'autre pour aligner le dispositif (1) sur une surface de coque (21) du palier d'angle de pale (20) d'une pale de rotor ou d'un composant relié à celle-ci, et au moins un module laser (5) espacé du plan de jonction (4) entre les deux dispositifs d'aide à l'alignement (3) et destiné à émettre un faisceau laser visible (6) de telle sorte que le faisceau laser (6) coupe le plan de jonction (4).

2. Dispositif selon la revendication 1, **caractérisé en ce que** les dispositifs d'aide à l'alignement (3) et ledit au moins un module laser (5) sont fixés sur un corps de base (2) commun.

3. Dispositif selon la revendication 2, **caractérisé en ce que** le corps de base (2) est fendu, en partant de la zone de fixation du module laser (5), de telle sorte qu'un faisceau laser (6) émis par le module laser (5) peut projeter un motif laser (6') des deux côtés du corps de base (2).

4. Dispositif selon la revendication 3, **caractérisé en ce que** le motif laser (6') comprend une ligne qui est projetée des deux côtés du corps de base (2).

5. Dispositif selon l'une quelconque des revendications 2 à 4, **caractérisé en ce que** les zones de fixation pour les dispositifs d'aide à l'alignement (3) et ledit au moins un module laser (5) sont introduits dans le corps de base (2) avec une grande précision, de préférence par un procédé de fabrication assisté par CNC.

6. Dispositif selon l'une quelconque des revendications précédentes, **caractérisé en ce qu'**un plan d'extension longitudinale du faisceau laser (6) coupe le plan de jonction (4) entre les deux dispositifs d'aide à l'alignement (3) selon un angle d'environ 90°, de préférence d'exactement 90°.

7. Dispositif selon l'une quelconque des revendications précédentes, **caractérisé en ce qu'**un plan d'extension longitudinale s'étend en parallèle à l'axe du palier d'angle de pale en cas d'utilisation correcte du dispositif (1).

8. Dispositif selon l'une quelconque des revendications précédentes, **caractérisé en ce qu'**un support magnétique (9) est prévu pour fixer le dispositif (1) de manière amovible au palier d'angle de pale (20).

9. Dispositif selon la revendication 8, **caractérisé en ce que** le support magnétique (9) est réalisé pour adhérer à la surface frontale du palier d'angle de pale.

10. Dispositif selon l'une quelconque des revendications précédentes, **caractérisé en ce que** le dispositif (1) comprend une batterie, de préférence une batterie rechargeable, pour alimenter le module laser (5) en énergie électrique.

11. Procédé de réglage d'angle de pale d'une pale de rotor d'une éolienne avec un dispositif (1) selon l'une quelconque des revendications précédentes, comprenant les étapes consistant à :
a) appliquer le dispositif (1) avec ses dispositifs d'aide à l'alignement (3) contre une surface de coque (21) du palier d'angle de pale (20) de la pale de rotor ou d'un composant relié à celle-ci de telle sorte qu'un faisceau laser (6) partant du dispositif (1) est incident sur un repère de moyeu (25) au niveau du dispositif (1) ;
b) fixer le dispositif (1) dans la position trouvée ; et
c) déplacer la pale de rotor jusqu'à ce qu'un faisceau laser (6) partant du dispositif (1) soit incident sur un repère de pale de rotor sur la pale de rotor.

12. Procédé selon la revendication 11, **caractérisé en ce que** le repère de moyeu (25) et le repère de pale de rotor correspondent à un repère 0°.

13. Procédé selon la revendication 11 ou 12, **caractérisé en ce qu'**avant l'application du dispositif (1) à une surface de coque (21) du palier d'angle de pale (20) de la pale de rotor ou d'un composant relié à celle-ci, l'alignement angulaire du plan d'extension longitudinale par rapport au plan de jonction (4) entre les deux dispositifs d'aide à l'alignement ou par rapport à l'axe du palier d'angle de pale (20) est vérifié et/ou ajusté à une valeur prédéfinie.
